# EUROPEAN PATENT APPLICATION

(11) **EP 4 844 476 A1**
(43) Date of publication of application: **25.11.2026**
(21) Application number: 25177706.6
(22) Date of filing: 20.05.2025
(51) Int. Cl.: G02F 1/01

(54) **NON-VOLATILE OPTOMECHANICAL PHASE SHIFTERS**

(71) Applicant: Imec VZW, 3001 Leuven (BE)
(72) Inventor: SHARIF AZADEH, Mohammad Saeed, 3001 Leuven (BE); FIGEYS, Bruno, 3001 Heverlee (BE); JANSEN, Roelof, 3001 Heverlee (BE)
(74) Representative: Winger

(57) **Abstract**

A photonic integrated phase shifter comprising:
a waveguide (1) for guiding an electromagnetic wave (2), if present, and an actuator comprising a suspended structure (4) comprising a deformation-retentive material (5) that is switchable, on application of a stimulus, between multiple material states for inducing a non-volatile deformation of the suspended structure (4), arranged so that said deformation provides a movement of the suspended structure (4) with respect to the waveguide (1) so as to change an amount of optical coupling between the suspended structure (4) and an evanescent part of the electromagnetic wave (2), thereby changing the effective refractive index experienced by the electromagnetic wave (2).

## Description

### Technical field of the invention

The present invention relates to the field of integrated photonic devices, and more specifically to photonic integrated phase shifter.

### Background of the invention

Photonic integrated circuits (PICs) have emerged as a transformative technology for applications spanning telecommunications, sensing, computing, and data processing. These circuits manipulate electromagnetic waves, e.g., light, through various components including waveguides, splitters, combiners, and phase shifters to perform complex optical functions. Among these components, phase shifters are particularly important as they control the phase of the electromagnetic waves propagating through optical pathways, enabling functionalities in interferometric devices, optical switches, and reconfigurable photonic circuits.

In contemporary photonic systems, there is increasing demand for components that can maintain their operational state without continuous power consumption and continuously applying a stimulus such as a voltage. This capability, often referred to as "non-volatility" or "memory", is particularly valuable for energy-efficient systems and applications where state persistence is required, such as in memory devices. Additionally, such devices can be employed in novel computational schemes, such as in-memory computing, as well as neuromorphic computing. Conventional phase shifters typically operate in a volatile manner, requiring constant power, or at least continuous application of a stimulus, to maintain a specific phase state, and they return to their default state once the external trigger signal is removed.

The implementation of memory capabilities in photonic phase shifters presents significant challenges. Current approaches often involve materials whose optical properties change in response to external stimuli. Phase change materials (PCMs) represent one widely explored option, undergoing transitions between amorphous and crystalline states when subjected to thermal stimuli, resulting in refractive index change. As light interacts directly with a PCM, its effective index and thus its optical phase is modulated.

While these materials offer state retention, they introduce several difficulties into photonic systems.

A major challenge with conventional PCM-based approaches is optical loss. When PCMs interact directly with a guided electromagnetic wave, they often introduce substantial absorption, particularly at shorter wavelengths. This absorption degrades signal quality and reduces overall system efficiency. The wavelength dependence of these losses further complicates matters, with many existing solutions being unable to operate effectively across the entire optical spectrum, particularly in the visible range.

Another limitation of existing approaches is the difficulty in achieving continuous, analogue control over phase shifts. Many current solutions offer only binary or discrete-state operation, restricting the precision with which optical signals can be manipulated. This limitation is particularly problematic for applications requiring fine phase control, such as adaptive optics or precise interferometric systems.

Challenges remain in addressing these various issues in the field of photonic phase shifting. Advancing this technology could enable new capabilities in programmable photonic circuits, optical computing architectures, and photonic neural networks, potentially leading to more efficient and powerful optical information processing systems.

There is thus still a need in the art for devices and methods that address at least some of the above problems.

### Summary of the invention

It is an objective of the present invention to provide a good photonic integrated phase shifter and a good method using the photonic integrated phase shifter.

The above objective is accomplished by a method and apparatus according to the present invention.

It is an advantage of embodiments of the present invention that non-volatility of a phase shift can be realized through a hysteretic mechanical response.

It is an advantage of embodiments of the present invention that the phase shift can remain stable for extended periods without power consumption and in absence of a stimulus or control signal.

It is an advantage of embodiments of the present invention that continuous control over the phase shift can be achieved for analog tuning.

It is an advantage of embodiments of the present invention that broad-spectrum operation from visible to infrared may be facilitated.

It is an advantage of embodiments of the present invention that compatibility with photonic in-memory computing, photonic AI accelerators, and other programmable photonic circuits can be supported.

In a first aspect, the present invention relates to a photonic integrated phase shifter comprising a waveguide for guiding an electromagnetic wave, if present, and an actuator comprising a suspended structure comprising a deformation-retentive material that is switchable, on application of a stimulus, between multiple material states for inducing a non-volatile deformation of the suspended structure, arranged so that said deformation provides a movement of the suspended structure with respect to the waveguide so as to change an amount of optical coupling between the suspended structure and an evanescent part of the electromagnetic wave, thereby changing the effective refractive index experienced by the electromagnetic wave.

In a second aspect, the present invention relates to a memory element comprising the photonic integrated phase shifter of the first aspect.

In a third aspect, the present invention relates to use of the photonic integrated phase shifter of the first aspect for shifting an optical phase of an electromagnetic wave.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1A-C are schematic cross-sectional views of a first exemplary photonic integrated phase shifter, comprising a ferroelectric deformation-retentive material, in different operational states according to embodiments of the present invention.
FIG. 2 is a graphical representations of hysteresis characteristics of a piezoelectric material used in the photonic integrated phase shifter according to embodiments of the present invention.
FIG. 3A and B are a simulation view showing bending and hysteresis loops of a ferroelectric cantilever, respectively, for the photonic integrated phase shifter according to embodiments of the present invention.
FIG. 4A-D are schematic cross-sectional views of a second exemplary photonic integrated phase shifter, comprising a phase change material as the deformation-retentive material, in different operational states according to embodiments of the present invention.
FIG. 5A-C are schematic cross-sectional views of a third exemplary photonic integrated phase shifter, comprising a ferromagnetic deformation-retentive material, in different operational states according to embodiments of the present invention.
FIG. 6 is a schematic cross-sectional view of a photonic integrated phase shifter implemented using a doubly clamped beam according to embodiments of the present invention.
FIG. 7 is a schematic cross-sectional view of a photonic integrated phase shifter implemented using a membrane according to embodiments of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. **It** means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a photonic integrated phase shifter comprising a waveguide for guiding an electromagnetic wave, if present, and an actuator comprising a suspended structure comprising a deformation-retentive material that is switchable, on application of a stimulus, between multiple material states for inducing a non-volatile deformation of the suspended structure, arranged so that said deformation provides a movement of the suspended structure with respect to the waveguide so as to change an amount of optical coupling between the suspended structure and an evanescent part of the electromagnetic wave, thereby changing the effective refractive index experienced by the electromagnetic wave.

The suspended structure is typically arranged for optically coupling with the evanescent part of the electromagnetic wave. Said evanescent part of the electromagnetic wave is typically a portion of the electromagnetic wave that extends outside of the waveguide, typically decaying exponentially outside the waveguide. The suspended structure can optically couple at a distance from the waveguide and does not need to touch the waveguide to achieve the optical coupling. In embodiments, said optical coupling comprises, or means, that the electromagnetic wave, or at least the evanescent part of the electromagnetic wave, interacts (e.g., partially) with the suspended structure. As a result, the suspended structure may affect the effective refractive index of the electromagnetic wave in the waveguide.

The waveguide itself is typically associated with a refractive index that depends on the material of which the waveguide is formed and on the wavelength of the electromagnetic wave. The effective refractive index is, however, typically also affected by the suspended structure located outside of the waveguide. The effective refractive index experienced by the electromagnetic wave is, therefore, typically an aggregate refractive index of the refractive index of, i.e., inherent to, the waveguide or waveguide material itself, and a refractive index resulting from the optical coupling of the wave with the suspended structure.

Therefore, the effective refractive index typically depends on the amount of optical coupling between the suspended structure and the evanescent part of the electromagnetic wave. Said amount of optical coupling typically refers to how strongly the evanescent part of the electromagnetic wave interacts with the suspended structure specifically in the overlapping evanescent region extending outside the waveguide's core, e.g., to the amount of spatial overlap between the suspended structure and the evanescent part of the electromagnetic wave.

The suspended structure is moveable with respect to the waveguide, which is typically a relative displacement or adjustment in position or orientation of the suspended structure so as to vary its spatial relationship to the waveguide. Preferably, the suspended structure does not contact the waveguide. Preferably, the waveguide is not moved by the movement of the suspended structure. The amount of optical coupling between the suspended structure and the evanescent part of the electromagnetic wave depends on the location - e.g., by the distance or the circumferential position - of the suspended structure with respect to the waveguide.

As such, when the suspended structure moves with respect to the waveguide, the amount of optical coupling between the electromagnetic wave and the suspended structure may change, thereby changing the effective refractive index experienced by the electromagnetic wave in the waveguide. By changing the effective refractive index experienced by the electromagnetic wave, the phase shifter may modify the phase, or induce a shift of the phase, of the electromagnetic wave propagating within the waveguide. Concretely, the phase shift Δφ resulting from the change in effective refractive index Δn_{eff} may be approximated by Δφ = 2π Δn_{eff} Lₘ/λ, with Lₘ the length of the waveguide along which the effective refractive index experienced by the electromagnetic wave in the waveguide is adapted by said optical coupling with the suspended structure, and λ the wavelength of the electromagnetic wave.

In embodiments, the photonic integrated phase shifter may be used for tuning or optimizing the phase of the electromagnetic wave.

In embodiments, the photonic integrated phase shifter may be used for storing data. The stored data may then correspond with different positions of the suspended structure with respect to the waveguide. The stored data may be read by detecting the phase shift induced by the suspended structure. In embodiments, the electromagnetic wave may, after said phase shift is provided by the photonic integrated phase shifter, propagate to a phase shift detector.

In embodiments, the waveguide may be any structure designed to confine and guide electromagnetic waves in one or more dimensions, typically along a single direction. Examples include ridge waveguides in silicon photonics, buried InP waveguides, or silica-based channel waveguides. In embodiments, the waveguide is part of a ring resonator, or a Mach-Zehnder interferometer, or a photonic crystal, or an amplitude modulator, or a filter, or an arrayed waveguide grating.

In embodiments, the deformation-retentive material refers to a material capable of undergoing a change in shape or geometry that remains stable or semi-permanent once the actuation stimulus is removed, thereby retaining the induced deformation. The deformation-retentive material is switchable, on application of the stimulus, between multiple material states for inducing a non-volatile deformation. As such, the deformation-retentive material typically has the capability to change between two or more structural or polarization states, each association with a different physical form or shape, by application of the stimulus, wherein the altered physical form or shape is retained in the absence of further stimulus. Examples include ferroelectric domains that switch polarization, thereby bending a beam into a new position, or chalcogenide-based phase change materials that switch from amorphous to crystalline states with different volume or stress profiles.

In embodiments, the non-volatile deformation, enabled by using the deformation-retentive material, refers to a mechanical displacement or shape change of the suspended structure that remains after removal of the stimulus - e.g., due to a non-volatile, retentive or permanent material state change, by, for example, a hysteresis effect -, allowing stable retention of a modified form in the absence of further stimulus. In embodiments, the material state refers to a state that is intrinsic to the material, such as a polarization state of the material, or a crystalline or amorphous solid phase of the material. In embodiments of the present invention, switching between different material states may induce switching between different structural states. Herein, material states are typically states intrinsic to the material, i.e., that are on themselves typically substantially independent of the shape or size of the material, such as polarization state or solid phase (e.g., crystalline or amorphous). In contrast, structural states are typically states not intrinsic to the material, such as shape or deformation. In embodiments, the deformation-retentive material is switchable between multiple material states, typically multiple solid material states, e.g., by applying different stimuli. Typically, said switching is reversible. For example, the deformation-retentive material may be switched from a first material state to a second material state by applying a first stimulus, and from the second material state to the first material state by applying a second stimulus. Said deformation, typically being associated with the material state change, is typically reversible as well. For example, by reversibly switching the deformation-retentive material between a first material state and a second material state, the deformation-retentive material may deform reversibly between a first shape and a second shape.

In embodiments, the suspended structure may comprise a multi-layer structure comprising at least one layer containing said deformation-retentive material. In embodiments, the multi-layer structure may be a multi-morph or a bi-morph. The different layers of the multi-layer structure are typically formed of different materials that exhibit a different deformation on application of the stimulus; for example, at least one layer of the multi-layer structure is formed of a material that, on itself, does substantially not deflect when the stimulus is applied to the deformation-retentive material. As such, the deformation, under influence of the stimulus, of the at least one layer containing said deformation-retentive material may result in stress in the multi-layer structure, which may be released by a movement or deflection of the multi-layer structure.

The present invention does not require the multi-layer structure, as the deformation-retentive material provides a deformation on itself, which may suffice for changing the optical coupling between the suspended structure and the evanescent part of the electromagnetic wave. However, the multi-layer structure may improve structural integrity of the suspended structure. Furthermore, the multi-layer structure may exhibit a larger deformation or deflection than the deformation-retentive material on itself. In particular, the use of the multi-layer structure may augment or magnify even a minor deformation of the deformation-retentive material, so that a large movement may be achieved by the suspended structure.

In embodiments, the stimulus is a controllable external influence that may be applied to the deformation-retentive material to trigger or enable a change of state, thereby inducing movement or deformation of the deformation-retentive material. The stimulus typically depends on the deformation-retentive material that is used. In embodiments, the stimulus may be applied DC voltage, a pulsed electrical signal, a localized heating current, an optical beam (e.g., for generating heat), or a magnetic field generated by a magnetic field generator.

In embodiments, the deformation-retentive material may be a ferroelectric material. In these embodiments, the stimulus may be a voltage. The ferroelectric material typically contains different material states corresponding to different polarization states of the ferroelectric material. Ferroelectric materials are typically crystalline substances containing a spontaneous electric polarization that can be reversed or reoriented by the stimulus, that is, by the voltage generating an electric field. Ferroelectric materials typically exhibit remanent polarization, so that the electric polarization remains at least partially reversed or reoriented after removal of the stimulus.

At the same time, ferroelectric materials exhibit piezoelectric properties. The piezoelectric properties, and the polarization, of the ferroelectric material are coupled, so that a change in its polarization results in a deformation of the ferroelectric material. By virtue of the remanent polarization, remaining after removal of the stimulus, also the deformation remains after removal of the stimulus.

In embodiments, the ferroelectric material may comprise lead-zirconate-titanate, ZnMn, BaTiO₃, or PbTiO₃. These specific materials provide reliable, reproducible ferroelectric properties and are compatible with integrated photonic fabrication processes.

In embodiments, the deformation-retentive material may be a phase change material. In these embodiments, the stimulus may be a voltage or heat, e.g., a change in temperature. The stimulus may, for example, be applied by application of a voltage to the phase change material, by a light beam irradiating the phase change material, or by a heating element in thermal contact with the phase change material.

The phase change material is typically a substance capable of undergoing a reversible transformation between at least two solid material states (e.g., a crystalline state and an amorphous state) under an applied stimulus - commonly a voltage or a thermal change. Phase change materials typically exhibit a hysteresis effect, wherein a first voltage or temperature at which the material switches from the crystalline to the amorphous material state differs from a second voltage or temperature at which it changes back from the amorphous to the crystalline material state. The voltage or temperature in absence of stimuli may be between said first and second voltage or temperature. As such, by applying a stimulus, comprising crossing the first or second voltage temperature, the phase change material may be switched between the crystalline and amorphous state, wherein, after removal of the stimulus, the phase change material retains said material state.

Phase change materials exhibit a substantial change in mechanical properties during switching between the different material states, i.e., during the phase transition. As one example, in the case of GeSbTe (a common phase change material) has a density of 5.5 g/cm³ in the amorphous phase and 6.5 g/cm³ in the crystalline phase, and an expansion coefficient of 13.3 K⁻¹ in the amorphous phase to 17.4 K⁻¹ in the crystalline phase. As such, the suspended beam containing the phase change material may be mechanically deformed or deflected when the phase change material is switched between the material states. This deformation or deflection is non-volatile, but reversible.

In embodiments, the phase change material may be any type of phase change material, for example, a chalcogenide glass, such as GeSbTe.

In embodiments, the deformation-retentive material may be a ferromagnetic material. In these embodiments, the stimulus may be a magnetic field. The ferromagnetic material typically contains different material states corresponding to different magnetization states of the material. The ferromagnetic material may be switched between the different magnetization states by application of the stimulus. In embodiments, the phase shifter may further comprise a magnetic field generator. The magnetic field generator may be arranged for applying a material-state-changing magnetic field for switching the ferromagnetic material between different material states, i.e., magnetization states. In embodiments, the magnetic field generator may be a coil or meandered nanowire adapted for converting a current that may be applied by a controller into a magnetic field. Alternatively, the magnetic field may be applied by an external device, e.g., a coil or permanent magnet that may be moved with respect to the ferromagnetic material for changing its magnetization state.

Ferromagnetic materials typically do not exhibit a piezoelectric effect. A deflection of the suspended beam resulting from the state change may be induced by a magnetic field generator for generating a deflecting magnetic field for deflecting (e.g., attracting or repelling) or deforming the ferromagnetic material. By said deflection or deformation of the ferromagnetic material, the suspended beam may be deformed. In embodiments, the phase shifter may further comprise said magnetic field generator for generating a deflecting magnetic field for deflecting the ferromagnetic material. The deflection or deformation of the suspended beam then depends on the magnetization state of the ferromagnetic material. As the different magnetization states are non-volatile, and remain after removal of the stimulus (typically due to hysteresis), the deformation also remains after removal of the stimulus.

In embodiments, the ferromagnetic material may comprise iron, nickel, cobalt, or permalloy (NiFe). These specific materials provide reliable, reproducible ferromagnetic properties and are compatible with various CMOS fabrication processes.

In embodiments, the deformation of the deformation-retentive material may be continuously tuned. For example, the polarization state of the ferroelectric or ferromagnetic material that remains after removal of the stimulus, may depend on the strength and time of the applied stimulus. The polarization state may be continuously tuned. For the ferroelectric material, the piezoelectrically induced movement or deformation of the actuator depends on the polarization state, which can be continuously tuned, so that the movement or deformation can be continuously tuned as well. For the ferromagnetic material, the magnetically induced movement or deformation of the actuator depends on the polarization state, which can be continuously tuned, so that the movement or deformation can be continuously tuned as well. In embodiments, the phase shift may be continuously tuned.

In embodiments, the photonic integrated circuit may be arranged so that said movement of the suspended structure with respect to the waveguide comprises a change of a size of a gap between the waveguide and the suspended structure. These embodiments may provide precise control over the evanescent coupling and resulting phase shift.

In embodiments, the suspended structure may be, or may be contained in, a single clamped cantilever, or a double-clamped beam, or a membrane suspended over the waveguide.

In embodiments, the suspended structure may comprise a modulator portion, different from said deformation-retentive material, for said optical coupling with the evanescent part of the wave, wherein said modulator portion is formed of a low-absorption material exhibiting a lower optical absorptivity with respect to the wave than the deformation-retentive material. In embodiments, optical absorptivity of the modulator portion is lower for at least one of the different material states, preferably lower for each of the different material states, of the deformation-retentive material. The deformation-retentive material may be an optically absorbing material, which may result in optical losses for the electromagnetic wave when it is optically coupled to the deformation-retentive material. By optically coupling the electromagnetic wave with the modulator portion, rather than with the deformation-retentive material, optical losses may be limited.

In embodiments, the phase shifter may comprise a controller for applying said stimulus to the deformation-retentive material.

In embodiments, applying the stimulus may comprise applying a voltage (or, correspondingly, a current) to the deformation-retentive material, e.g., to the ferroelectric material or the phase change material. In these embodiments, the controller may be electrically coupled to the deformation-retentive material for applying said voltage to the deformation-retentive material.

In embodiments, applying the stimulus may comprise electromagnetically or optically irradiating the deformation-retentive material, e.g., to the phase change material. In these embodiments, the controller may be coupled to a device for generating radiation, such as a laser or a LED, arranged for irradiating the deformation-retentive material. The controller may be configured for controller said device for generating radiation for applying the stimulus.

In embodiments, applying the stimulus may comprise applying the magnetic field to the deformation-retentive material, e.g., to the ferromagnetic material. In these embodiments, the controller may be coupled to the magnetic field generator for generating the material-state-changing magnetic field. The controller may be configured for controlling said magnetic field generator for applying the stimulus.

Any features of any embodiment of the first aspect may be independently as correspondingly described for any embodiment of any of the other aspects of the present invention.

In a second aspect, the present invention relates to a memory element comprising the photonic integrated phase shifter of the first aspect.

The non-volatile deformation of the suspended beam, and the associated non-volatile phase shift that may be induced by the phase shifter, may be used for optical memory applications utilizing the non-volatile nature of the phase shifter. Stored data may, then, correspond with a form or shape of the suspended beam, e.g., with a position of the suspended structure with respect to the waveguide. Stored data may then be read from the photonic integrated phase shifter by detecting the phase shift induced by the photonic integrated phase shifter.

Any features of any embodiment of the second aspect may be independently as correspondingly described for any embodiment of any of the other aspects of the present invention.

In a third aspect, the present invention relates to use of the photonic integrated phase shifter of the first aspect for shifting an optical phase of an electromagnetic wave.

Any features of any embodiment of the third aspect may be independently as correspondingly described for any embodiment of any of the other aspects of the present invention.

### Example 1: Suspended beam containing a ferroelectric material

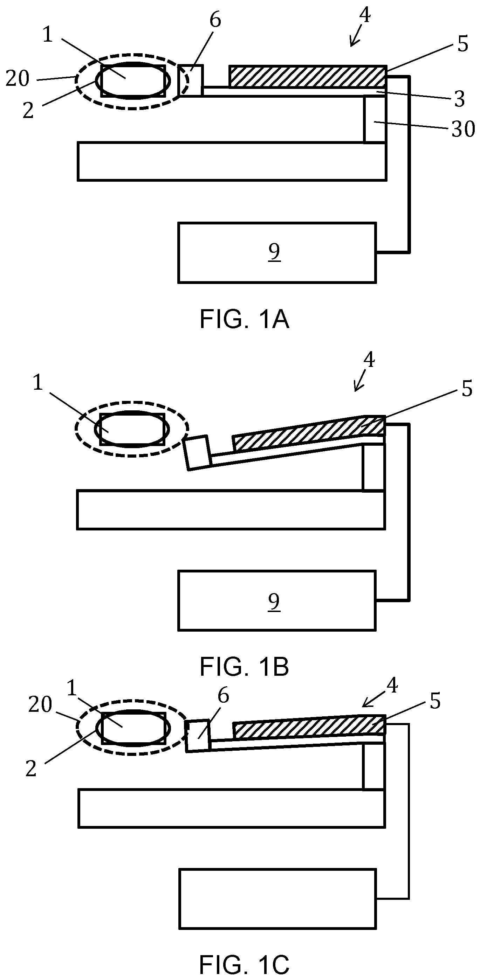

FIG. 1A is a schematic vertical cross-sectional representation of a photonic integrated phase shifter in accordance with embodiments of the present invention.

The photonic integrated phase shifter comprising a waveguide (1; represented by the cuboid) for guiding an electromagnetic wave (2; represented by the full-lined ellipse). The photonic integrated phase shifter further comprises an actuator comprising a suspended structure (4) comprising a deformation-retentive material (5). The deformation-retentive material (5) is switchable, on application of a stimulus, between multiple material states for inducing a non-volatile deformation of the suspended structure (4).

In the example illustrated, the waveguide (1) is a suspended waveguide (1), e.g., a silicon waveguide with air cladding. In the example illustrated, the suspended structure (4) is contained in a singly clamped cantilever (4) that, on one end of the cantilever (4), is positioned or fixed on a vertical structure or wall (30). In the example illustrated, the cantilever (4) contains a two-layered, bimorph structure consisting of two layers (3, 5). In the example illustrated, the bottom layer (3) is silicon, and the top layer is a ferroelectric material (5).

The suspended structure (4) is separated from the waveguide (1) by a gap. The photonic integrated phase shifter is preferably configured so that the suspended structure (4) does not touch the waveguide (1) in operation, e.g., on movement of the suspended structure (4). The photonic integrated phase shifter is preferably configured so that the position of the waveguide (1) is substantially independent on the position of the suspended structure (4). Indeed, typically, only a movement of the suspended structure (4) occurs, resulting in the relative movement of the suspended structure (4) with respect to the waveguide (1).

In FIG. 1A, the cantilever (4) is in a neutral position. In that neutral position, a modulator portion (6) of the suspended beam (4) has a first amount of optical coupling with the evanescent part of the electromagnetic wave (2). The evanescent part of the electromagnetic wave is a part of the electromagnetic wave that extends beyond the boundaries of the waveguide (1). The electric field of said evanescent part may drop roughly exponentially with a distance from the waveguide (1). The modulator portion (6) couples with the electromagnetic wave (2) for affecting the effective refractive index experienced by the electromagnetic wave (2). The modulator portion (6) is formed of a low-absorption material that is preferably substantially non-absorptive, e.g., transparent, to the electromagnetic wave (2), so that, although the effective refractive index may be changed by the suspended beam (4), the electromagnetic wave (2) is substantially not absorbed by the suspended beam (4). For example, the modulator portion (6) may be formed of silicon. The modulator portion (6) may be integral with the bottom layer (3), but this is not essential.

For explanatory purposes, the dashed lined ellipse (20) schematically illustrates where the electric field of the evanescent part of the electromagnetic wave (2) has dropped by a particular fraction with respect to the field of the electromagnetic wave (2) at the boundaries of the waveguide (1). When the suspended beam (4) is in the neutral position, the suspended beam (4), in particular, the modulator portion (6), has a first overlap, or a first optical coupling, or a first amount of optical coupling, with the evanescent part of the electromagnetic wave (2).

The photonic integrated phase shifter comprises a controller (9) for applying a stimulus to the deformation-retentive material (5). Reference is made to FIG. 1B. When the stimulus, e.g., a voltage, is applied to the deformation-retentive material (5) by the controller (9), the piezoelectric effect, typically inherent in the ferroelectric material (5), induces or causes the cantilever (4) the deform to bend either upward or downward, depending on the voltage polarity and initial poling of the ferroelectric material (5). In the example illustrated, the cantilever (4) bends downward.

In the present example, the deformation is particularly large because of the bimorph structure of the cantilever (4), wherein the bottom layer (3) being silicon is not directly affected by the applied stimulus, whereas the top layer being the ferroelectric material (5) does undergo a deformation by the applied stimulus: this results in considerable stress in the cantilever (4), resulting in a significant movement or bending of the cantilever (4) with respect to the waveguide (1).

Reference is made to FIG. 1C. The removal of the stimulus, i.e., voltage, leaves the cantilever (4) in a new position due to the hysteresis effect of the ferroelectric material (5) as it retains a remnant polarization. This non-volatile change in position of the cantilever (4) with respect to the waveguide (1) allows for a lasting optical phase shift without additional optical loss, as the optical mode does not overlap with the optically absorptive ferroelectric material (5).

Said bending alters the effective refractive index experienced by the electromagnetic wave (2), resulting from a change of the evanescent coupling of the electromagnetic wave (2) with the cantilever (4), e.g., with the modulator portion (6). This change in effective refractive index may result in a phase shift of the electromagnetic wave (2) in the waveguide (1) that is proportional to the voltage that has been applied to the ferroelectric material (5) (as the remnant polarization is typically proportional to said applied voltage). Indeed, this change in evanescent coupling may be observed on comparing FIG. 1A and 1C, by observing the change in amount of overlap, resulting from said bending, between the modulator portion (6) and the dashed lined ellipse (20) that schematically represents the evanescent field drop. In particular, as a result of the deformation of the cantilever (4), the position, e.g., distance or circumferential position, of the cantilever (4) with respect to the waveguide (1) has been changed.

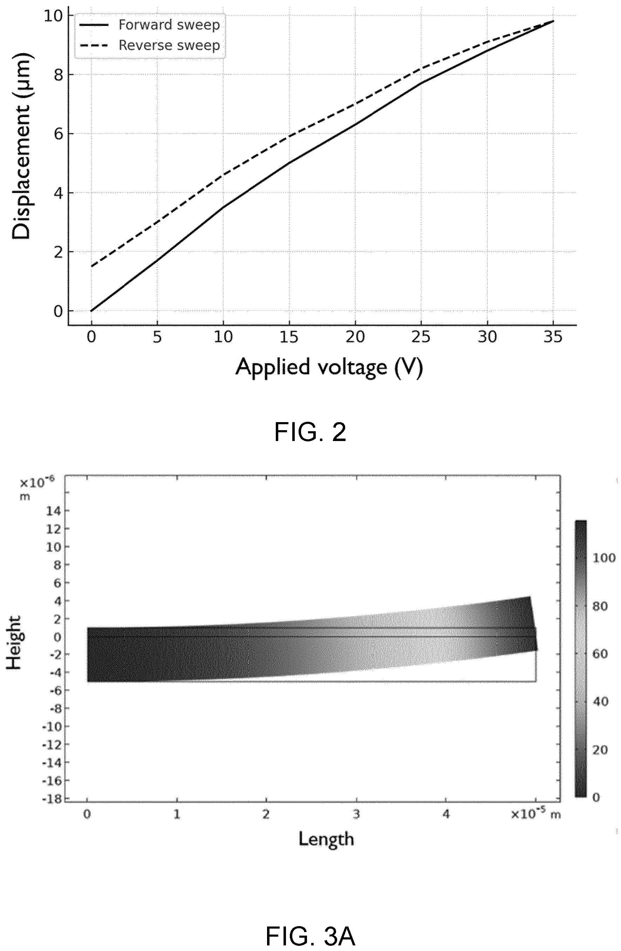

Referring to the graph of FIG. 2, the hysteresis characteristic is illustrated of a piezoelectric ferroelectric material (5) that may be used in the photonic integrated phase shifter. In particular, FIG. 2 depicts the relationship between displacement and applied voltage, applied to the ferroelectric material (5), which is - for this graph - an isolated structure and not part of a bimorph structure.

Concretely, FIG. 2 displays a hysteresis curve, characterized by a looped path, indicating the displacement response of the ferroelectric material (5) to a varying voltage level. It may be observed that the displacement, after increasing the applied stimulus to 150 V, does not return to the initial state (i.e., 0 µm) upon the removal of voltage, but is about 0.5 µm. As such, the curve demonstrates the non-linear and memory-retentive behaviour of the piezoelectric ferroelectric material (5).

The hysteresis behaviour of the ferroelectric material depicted in this graph is advantageous for the implementation of the optical phase shifters of embodiments of the present invention, as it allows for the retention of the phase shift even after the removal of the applied stimulus.

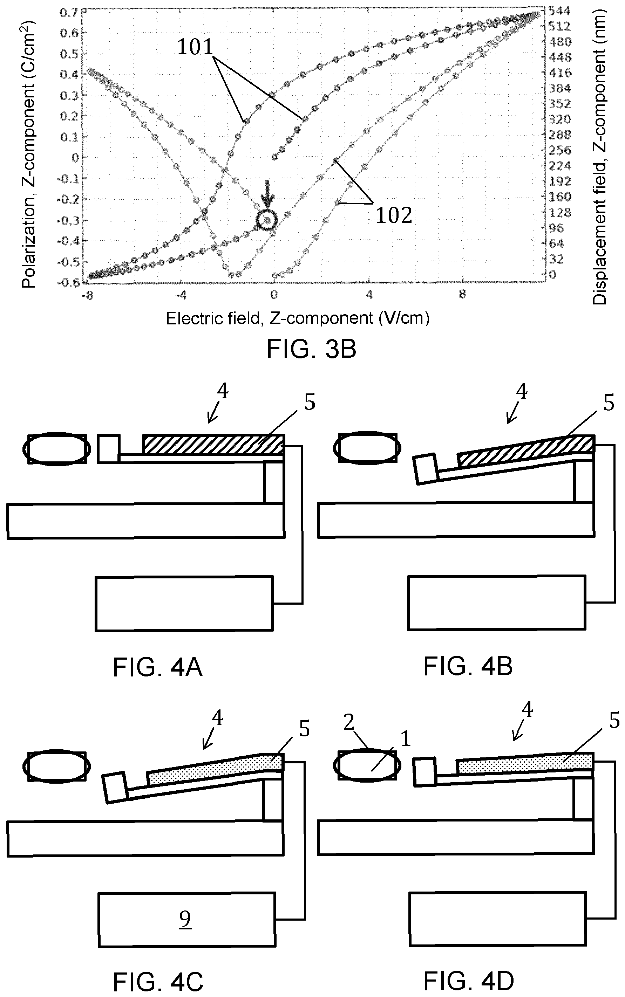

FIG. 3A and 3B are results from a simulation of a cantilever (4) comprising the ferroelectric material (5) used in a photonic integrated phase shifter in accordance with embodiments of the present invention is presented.

In FIG. 3A, the bending of the cantilever (4) is depicted by the full structure. The black lines indicate the original position of the cantilever (4). The cantilever (4) extends horizontally, with the left end fixed and the right end free. The bending motion with respect to the original position is induced by remnant polarization after removal of the stimulus.

FIG. 3B presents hysteresis loops for polarization and displacement. The graph plots the Z-component of the electric field (V/µm) on the horizontal axis against polarization (C/m²; curve 101) and displacement (nm; curve 102) on the vertical axes. The loops demonstrate the hysteretic behaviour of the ferroelectric material (5). This simulation underscores the feasibility of using ferroelectric thin films (5) to achieve non-volatile mechanical optical phase shifting, as the displacement of the cantilever (4) directly influences the phase shift of the guided electromagnetic wave.

### Example 2: Suspended beam containing a phase change material

FIG. 4A is a schematic vertical cross-sectional representation of a photonic integrated phase shifter in accordance with embodiments of the present invention, similar to that of Example 1; however, in the present example, the deformation-retentive material (5) of the suspended structure (4) is formed of a phase change material.

Reference is made to FIG. 4B. In the present example, an initial stimulus may be applied for inducing a volatile deformation of the phase change material (5). This initial stimulus has typically substantially no effect on the material state of the phase-change material - but the eventual, non-volatile displacement of the suspended beam (4) after application of the material state-changing stimulus may be dependent on the (magnitude of the) initial stimulus and may hence be rendered continuous by the initial stimulus. In principle, the initial stimulus may comprise any type of stimulus suitable for deforming the phase change material (5), including an electro-statically induced force that may be applied to the cantilever (4). The cantilever (4) is shown in a bent position, indicating the application of the force. This initial deformation is typically volatile, and on removal of the force, the cantilever (4) would bend back to the position shown in FIG. 4A.

Reference is made to FIG. 4C. Next, e.g., while still applying said force, the phase change material (5) may be induced, by application of a stimulus, to switch between different material states, e.g., undergo a phase transition between a crystalline phase and an amorphous phase. This transition may be achieved through an electrical signal that may be applied by a controller (9) for applying a voltage, or a temperature change, to the phase change material (5) for switching between the different material states. However, any way of applying the stimulus for switching between the different material states, including, for example, an optical beam or by including a heating element thermally coupled to the phase change material (5), may be used.

This phase transition typically alters the mechanical properties of the phase change material (5) in a non-volatile way that is retained after removal of the stimulus. As such, the cantilever (4), upon removal of the stimulus (and the optional initial stimulus), does not return to its original position due to the modified mechanical properties of the phase change material (5) by said phase transition. Reference is made to FIG. 4D. This phase transition results in a new steady-state position of the cantilever (4), which is different from the initial state (cfr. FIG. 4A), thereby changing the effective refractive index experienced by the electromagnetic wave (2) in the waveguide (1).

In the present example, apart from the stimulus for changing the material state of the phase change material (5), an (initial) stimulus that is a force is applied for volatilely bending of the phase change material (5) before applying said stimulus for inducing said phase change. Although said force may be advantageous as it may enhance the deformation, said force is not strictly required, as the intrinsic material properties of the different material states of the phase change material (5) are typically sufficiently different to achieve a deformation of the cantilever (4) even if no force is applied prior to said phase change.

### Example 3: Suspended beam containing a ferromagnetic material

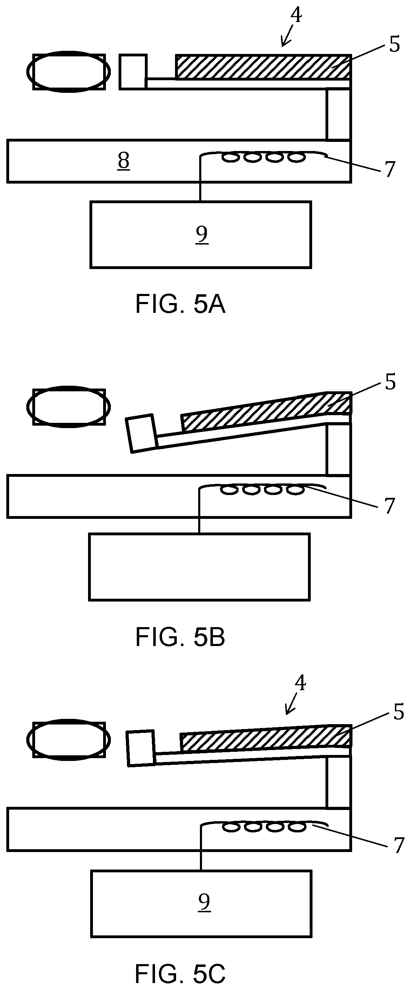

FIG. 5A is a schematic vertical cross-sectional representation of a photonic integrated phase shifter, in accordance with embodiments of the present invention, similar to that of Example 1 and 2; however, in the present example, the deformation-retentive material (5) of the suspended structure (4) is formed of a ferromagnetic material.

The magnetic field generator (7) may be provided as - different from ferroelectric materials that exhibit piezoelectricity - a ferromagnetic material (5), which often does not exhibit a piezoelectric effect. Therefore, in the present example, the photonic integrated phase shifter comprises a magnetic field generator (7) for generating a deflecting magnetic field for deflecting the ferromagnetic material (5).

The magnetic field generator (7) may generate an intermittent (e.g., the deflecting magnetic field may be only applied when the phase shift is to be applied, or when information is to be read from the photonic integrated phase shifter if it is used as memory element), or a substantially constant, magnetic field so that the ferromagnetic material (5), and hence the suspended beam (4), deforms dependent on its magnetization. The magnetic field generator (7) may be any structure adapted for generating a magnetic field. The magnetic field generator (7) is magnetically coupled to the suspended structure (4). In the present example, the magnetic field generator (7) is a coil (7) embedded in the substrate (8). In the present example, the magnetic field generator (7) is controlled by a controller (9).

Reference is made to FIG. 5B. In the present example, ferromagnetic domains of the ferromagnetic material (5) may be re-oriented - corresponding to switching between material states - by application of a stimulus comprising a magnetic field. Said material-state-change inducing stimulus may be applied by the magnetic field generator (7) controlled by the controller (9), or may be applied by another magnetic field generator (which may be controlled by the controller as well).

Reference is made to FIG. 5C. After removal of said material-state-change inducing stimulus, the magnetization of the ferromagnetic material (5) has changed. On application of the deflecting magnetic field by the coil (7), the deflection of the suspended structure (4) changes compared to the original magnetization (cfr. FIG. 5A).

### Example 4: Doubly clamped beams and suspended membranes

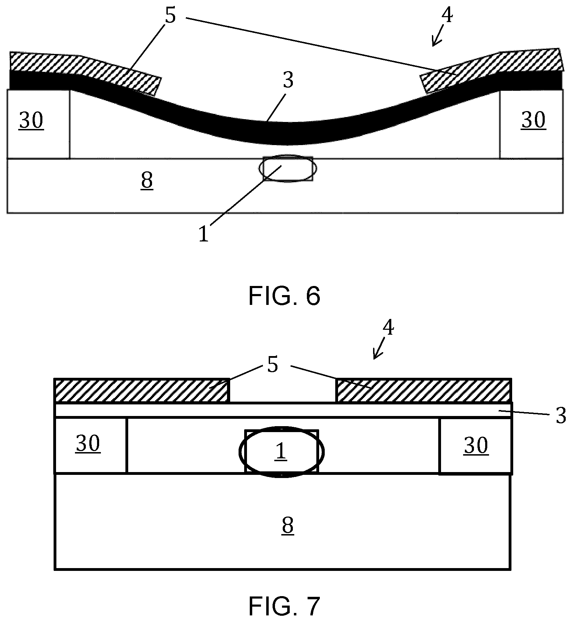

Although in Examples 1 to 3 above, the suspended structure is a cantilever comprising a single-clamped beam, the invention is not limited thereto. Illustrated in FIG. 6 and 7 are photonic integrated phase shifters in accordance with embodiments of the present invention, following a similar principle but using, as the suspended structure (4), doubly clamped beams - e.g., clamped on opposite sides of the waveguide (1) by vertical structures or walls (30) - or suspended membranes - which may be resting on vertical structures or walls (30) on opposite sides of the waveguide (1). The doubly clamped beams and suspended membranes may be located over the waveguide (1), separated from the waveguide (1) by a gap, and may be vertically moveable with respect to the waveguide (1) for changing an effective refractive index experienced by an electromagnetic wave propagating in the waveguide (1).

In the illustrated systems, the suspended structure (4) contains a bottom layer (3) and two distinguished layers formed of the deformation-retentive material (5) on the bottom layer (3), each located on opposite sides of the waveguide (1). This multilayer or multi-morph configuration may result in good actuation of the suspended with respect to the waveguide (1); however, this configuration is not required, and instead, a single layer formed of the deformation-retentive material (5) on the bottom layer (3), or a suspended structure formed of the deformation-retentive material (5) (so without the separate bottom layer 3) could be used.

In Examples 1 to 3 above, the waveguide (1) is a suspended waveguide. This is not required. In FIG. 6, the waveguide (1) is embedded in a substrate (8). In FIG. 7, the waveguide (1) is positioned on a substrate (8).

It is to be understood that although preferred embodiments, specific constructions and configurations, as well as materials, have been discussed herein for devices according to the present invention, various changes or modifications in form and detail may be made without departing from the scope of this invention. Steps may be added or deleted to methods described within the scope of the present invention.

## Claims

1. A photonic integrated phase shifter comprising:
a waveguide (1) for guiding an electromagnetic wave (2), if present, and an actuator comprising a suspended structure (4) comprising a deformation-retentive material (5) that is switchable, on application of a stimulus, between multiple material states for inducing a non-volatile deformation of the suspended structure (4), arranged so that said deformation provides a movement of the suspended structure (4) with respect to the waveguide (1) so as to change an amount of optical coupling between the suspended structure (4) and an evanescent part of the electromagnetic wave (2), thereby changing the effective refractive index experienced by the electromagnetic wave (2).

2. The photonic integrated phase shifter of claim 1, wherein the suspended structure (4) comprises a multi-layer structure comprising at least one layer containing said deformation-retentive material (5).

3. The photonic integrated phase shifter of any of the previous claims, wherein the deformation-retentive material (5) is a ferroelectric material, wherein the stimulus is a voltage.

4. The photonic integrated phase shifter of claim 3, wherein the ferroelectric material (5) comprises lead-zirconate-titanate, ZnMn, BaTiO₃, or PbTiO₃.

5. The photonic integrated phase shifter of claim 1 or 2, wherein the deformation-retentive material (5) is a phase change material, wherein the stimulus is heat.

6. The photonic integrated phase shifter of claim 1 or 2, wherein the deformation-retentive material (5) is a ferromagnetic material (5), wherein the stimulus is a magnetic field.

7. The photonic integrated phase shifter of claim 6, further comprising a magnetic field generator (7).

8. The photonic integrated circuit of any of the previous claims, arranged so that said movement of the suspended structure (4) with respect to the waveguide (1) comprises a change of a size of a gap between the waveguide (1) and the suspended structure (4).

9. The photonic integrated phase shifter of any of the previous claims, wherein the suspended structure (4) is a single clamped cantilever, or a double-clamped beam, or a membrane suspended over the waveguide (1).

10. The photonic integrated phase shifter of any of the previous claims, wherein the suspended structure (4) comprises a modulator portion (6), different from said deformation-retentive material (5), for said optical coupling with the evanescent part of the electromagnetic wave (2), wherein said modulator portion (6) is formed of a low-absorption material exhibiting a lower optical absorptivity with respect to the electromagnetic wave (2) than the deformation-retentive material (5).

11. The photonic integrated phase shifter of any of the previous claims, comprising a controller (9) for applying said stimulus to the deformation-retentive material (5).

12. A memory element comprising the photonic integrated phase shifter of any of the previous claims.

13. Use of the photonic integrated phase shifter of any of claims 1 to 11 for shifting an optical phase of an electromagnetic wave (2).
